# FASCICULE DE BREVET EUROPEEN

(11) **EP 0 304 373 B1**
(45) Date de publication et mention de la délivrance du brevet: **08.06.1994**
(21) Numéro de dépôt: 88402075.1
(22) Date de dépôt: 10.08.1988
(51) Int. Cl.: H01F 41/14, G11B 5/31, H01L 21/00

(54) **Procédé d'obtention d'un motif notamment en matériau ferromagnétique ayant des flancs de pente différente et tête magnétique comportant un tel motif**
Verfahren zur Herstellung, eines Motivs, insbesondere aus ferromagnetischem Material mit Flanken von verschiedener Steilheit, und Magnetkopf mit einem solchen Motiv
Process for the obtention of a pattern, especially from a ferromagnetic material having flanks with different steepnesses, and magnetic head with such a pattern

(30) Priorité: 14.08.1987 FR 8711599
(43) Date de publication de la demande: 22.02.1989
(73) Titulaire: COMMISSARIAT A L'ENERGIE ATOMIQUE Etablissement de Caractère Scientifique Technique et Industriel, 75015 Paris (FR)
(72) Inventeur: Sibuet, Henri, F-38120 Saint Egreve (FR)
(74) Mandataire: Signore, Robert

(56) Documents cités:
- FR-A- 2 380 636
- US-A- 3 904 462
- US-A- 4 326 936
- US-A- 4 443 294
- PATENT ABSTRACTS OF JAPAN, vol. 10, no. 3 (P-418)[2060], 8 janvier 1986; & JP-A-60 160 009 (DENSHI KEISANKI KIHON GIJUTSU KENKIYUU KUMIAI) 21-08-1985
- PATENT ABSTRACTS OF JAPAN, vol. 2, no. 115, 25 septembre 1978, page 6543E78; & JP-A-53 81 110 (TOKYO SHIBAURA DENKI K.K.) 18-07-1978
- PATENT ABSTRACTSOF JAPAN, VOL. 5, NO. 122 (P-74)(794), 07.08.81

## Description

La présente invention a pour objet un procédé d'obtention d'un motif ayant des flancs de pente différente utilisable notamment en microélectronique chaque fois qu'il est nécessaire d'obtenir un passage de marche incliné, facilitant le dépôt et la continuité des couches déposées ultérieurement.

Plus spécialement l'invention s'applique à la réalisation de pièces polaires de têtes magnétiques d'écriture-lecture fabriquées en technologie intégrée sur un substrat isolant.

De façon connue, une tête magnétique d'écriture-lecture, réalisée en technologie intégrée, comporte une pièce polaire reposant sur un support isolant et présentant, dans la zone de l'entrefer, un appendice servant à la magnétisation d'un support magnétique (disque, bande) sur lequel doivent être enregistrées les informations à conserver. Des conducteurs électriques permettent de véhiculer les courants électriques responsables de la création, dans l'entrefer, des champs magnétisant. Ces conducteurs se présentent sous la forme de couches conductrices surmontant la pièce polaire.

Pour magnétiser une zone bien précise du support magnétique, afin de faciliter la lecture des informations stockées sur le support et de permettre le stockage d'un grand nombre d'informations sur le support, l'appendice de la pièce polaire doit présenter une largeur constante et précise et avoir des flancs verticaux. Ceci est généralement obtenu par gravure directive d'une couche ferromagnétique, à travers un masque de gravure de forme identique à celle que l'on désire obtenir pour la pièce polaire.

Compte tenu de l'épaisseur relativement importante de la couche ferromagnétique, la gravure directive conduit à la formation de marche dont le franchissement par les couches de matériau surmontant la pièce polaire présente un certain nombre d'inconvénients.

En particulier, ce passage de marche, conduit à un rétrécissement des conducteurs électriques servant à la création du champ magnétisant dans l'entrefer, augmentant leur résistance électrique et diminuant ainsi les performances de la tête magnétique. En outre, ce passage de marche peut, dans certains cas, conduire à une rupture de ces conducteurs empêchant ainsi tout fonctionnement de la tête magnétique d'écriture-lecture.

Pour adoucir le passage de la marche, on a envisagé de recouvrir la partie arrière de la pièce polaire, opposée à l'appendice de magnétisation, de couches d'aplanissement ou de "planarisation", généralement en polymères. Malheureusement, ces couches d'aplanissement présentent une stabilité thermique faible, diminuant les performances des têtes magnétiques.

En outre, la mise en oeuvre de ces couches polymériques est relativement complexe et peu reproductible, ce qui est particulièrement gênant pour la fabrication en série de têtes magnétiques, en technologie intégrée.

Enfin, l'augmentation du nombre de matériaux entrant dans la constitution des têtes magnétiques nuit à leur intégrité par affaiblissement de leurs performances magnétiques.

La présente invention a justement pour objet un procédé d'obtention d'un motif notamment en matériau ferromagnétique, ayant des flancs de pente différente, permettant de remédier aux différents inconvénients ci-dessus. Ce procédé permet en particulier la réalisation de pièces polaires présentant un passage de marche adouci, sans toutefois nécessiter la présence de matériaux de planarisation.

Le principe du procédé selon l'invention est basé sur la réalisation d'un masque, représentant l'image du motif à réaliser et possédant un profil de pente variable identique à celui que l'on désire obtenir, puis sur le transfert de la forme et du profil de ce masque dans la couche souhaitée, en particulier en matériau ferromagnétique, par gravure directive de la couche correspondante voir US-A-3 904 462.

Ce procédé permet d'assurer un respect parfait des formes du masque de gravure, dans la couche sous-jacente, par gravure verticale dans les régions qui le nécessitent ainsi que l'obtention dans cette même couche sous-jacente d'un flanc incliné facilitant le passage de marche pour les couches ultérieurement déposées.

De façon plus précise, l'invention a pour objet un procédé d'obtention d'un motif en un premier matériau, présentant des flancs de pente différente, comprenant les étapes suivantes :
a) dépôt sur une couche de premier matériau d'une première couche de résine photosensible ;
b) formation d'une ouverture à flancs inclinés dans la première couche de résine,
c) réalisation d'un masque sur la première couche de résine, masquant en partie ladite ouverture, définissant la forme du motif à réaliser et comportant un flanc incliné s'appuyant sur le flanc incliné correspondant de ladite ouverture ;
d) gravure anisotrope de la première couche de résine, selon une direction perpendiculaire à la surface de l'échantillon afin d'éliminer les régions de cette première couche non masquées ;
e) élimination du masque ;
f) gravure anisotrope de la couche du premier matériau, selon une direction perpendiculaire à la surface de l'échantillon, en utilisant la première couche de résine gravée comme masque de gravure ; et
g) élimination du restant de la première couche de résine.

Par gravure anisotrope, il faut comprendre une gravure unidirectionnelle du type usinage ionique ou du type gravure ionique réactive (GIR), effectuée selon une direction perpendiculaire à la surface de l'échantillon.

Le procédé selon l'invention permet l'obtention d'un masque de gravure pour la couche de premier matériau, comportant à la fois des flancs abrupts, et des flancs inclinés. Une telle configuration ne pourrait nullement être obtenue en formant directement par photolithogravure l'image du motif à réaliser dans la première couche de résine, c'est-à-dire sans l'utilisation d'un masque de gravure intermédiaire (étape c).

Ce procédé est relativement simple et ne comporte aucune étape critique contrairement au procédé de l'art antérieur.

L'ouverture à flancs inclinés dans la première couche de résine photosensible peut être réalisée par photolithogravure suivie d'un recuit de polymérisation de la résine.

La résine photosensible utilisée peut être une résine positive ou négative, éventuellement polymérisable, telle que celle classiquement utilisée en microélectronique.

Avantageusement on utilise comme première couche de résine une couche photosensible positive polymérisable par chauffage. Dans ce cas, l'ouverture à flancs inclinés dans cette couche est obtenue avantageusement en formant par photolithogravure une ouverture dans cette couche de résine, comportant des flancs verticaux, suivie d'une polymérisation de la résine par chauffage afin d'obtenir les flancs inclinés.

Afin d'obtenir des flancs inclinés en pente douce, la première couche de résine présente une épaisseur relativement importante, supérieure à 2 »m.

Pour permettre la réalisation d'un masque de résine ayant des flancs bien nets et plans (sans ondulations) dans la première couche de résine épaisse, on utilise avantageusement la technique "tricouche" de masquage. A cet effet, l'étape (c) du procédé de l'invention consiste avantageusement à :
- déposer une couche de second matériau sur la structure obtenue lors de l'étape (b) que l'on peut graver sélectivement par rapport au premier matériau et par rapport à de la résine ;
- déposer une seconde couche de résine photosensible sur toute la couche du second matériau ;
- définir la forme du motif à réaliser dans la seconde couche de résine par photolithogravure,
- effectuer une gravure anisotrope de la couche de second matériau afin d'éliminer les régions de second matériau non recouvertes de résine et de mettre à nu les régions sous-jacentes de la première couche de résine.

Le procédé selon l'invention est parfaitement bien adapté à la réalisation d'un motif à profil de pente variable dans une couche ferromagnétique notamment à base de fer et de nickel. Toutefois, d'autres matériaux ferromagnétiques peuvent être utilisés comme par exemple l'alliage de fer, silicium et aluminium connu sous le nom SENDUST.

Conformément à l'invention le second matériau doit être différent du premier matériau dans lequel on réalise le motif à profil de pente variable, c'est-à-dire que ces deux matériaux doivent pouvoir être gravés indépendamment l'un de l'autre. De même, le premier et le second matériaux doivent pouvoir se graver sélectivement par rapport à la résine des première et seconde couches de résine, ces dernières pouvant être identiques ou différentes.

Dans le cas particulier d'un premier matériau à base de fer et de nickel, et de résines photosensibles généralement utilisées en photolithogravure, le second matériau peut être du dioxyde de silicium, du silicium, du nitrure de silicium, etc...

Le procédé selon l'invention s'applique avantageusement à la fabrication de la pièce polaire d'une tête magnétique d'écriture-lecture sur un substrat isolant, ladite pièce polaire comportant des flancs à pente différente. Ce substrat doit présenter de bonnes propriétés mécaniques et thermiques ; il est en particulier réalisé en céramique.

L'invention a aussi pour objet une tête magnétique d'écriture-lecture obtenue par le procédé selon l'invention. Cette tête magnétique se caractérise en ce que la pièce polaire comporte dans une première région un appendice à flancs abrupts perpendiculaires à la surface du support, et dans une seconde région opposée à la première région, un flanc incliné par rapport à ladite surface.

Cette tête magnétique présente des performances magnétiques améliorées par rapport à celles de l'art antérieur.

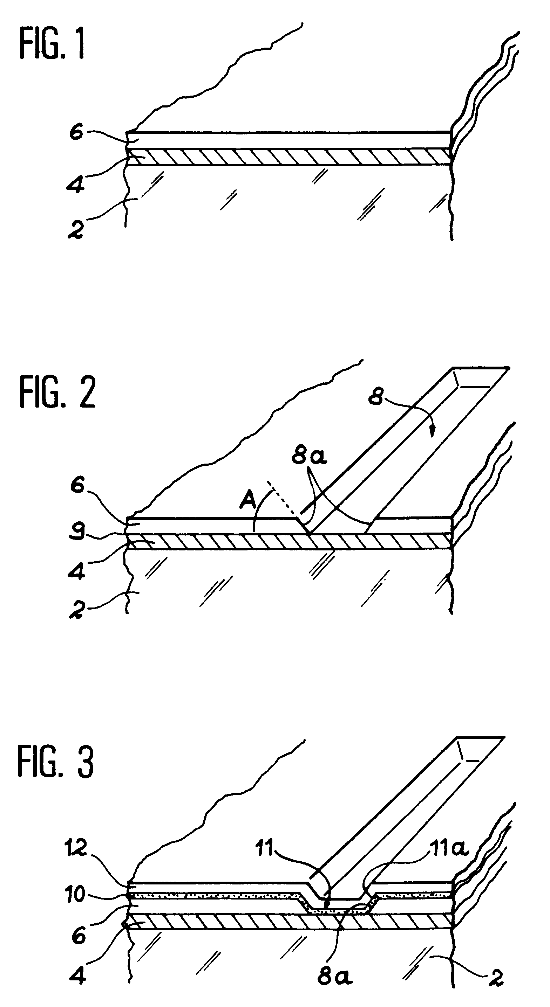

D'autres caractéristiques et avantages de l'invention ressortiront mieux de la description qui va suivre, donnée à titre illustratif et non limitatif, en référence aux figures 1 à 7 annexées représentant, en perspective et schématiquement, les différentes étapes du procédé conforme à l'invention.

Ce procédé étant particulièrement bien adapté à la réalisation de la pièce polaire d'une tête magnétique d'écriture-lecture en technologie intégrée, la description ci-après se rapportera à la réalisation d'une telle pièce polaire.

La première étape du procédé, comme représentée sur la figure 1, consiste à déposer sur un substrat 2 en céramique, par exemple en alumine chargée ou non en carbure de titane, une couche ferromagnétique 4 en fer-nickel (ou Permalloy), de 2»m d'épaisseur par pulvérisation cathodique. On dépose ensuite une couche de résine photosensible 6 positive de 3 »m d'épaisseur environ. Cette résine est en particulier l'une de celles commercialisées par la Société SHIPPLEY sous les références Microposit 1375.

On effectue ensuite une ouverture 8, telle que représentée sur la figure 2, dans la couche de résine 6 par photolitogravure, c'est-à-dire par insolation de la résine à travers un photomasque représentant l'image de l'ouverture 8 à réaliser et définissant les dimensions de cette dernière puis développement de la résine insolée dans un développeur tel que celui commercialisé par la Société SHIPPLEY.

Afin d'obtenir des flancs 8a inclinés pour l'ouverture 8, on soumet la couche de résine 6 à un traitement thermique entraînant sa polymérisation et un fluage de cette dernière. Pour la résine Microposit 1375 ce traitement thermique est effectué pendant trois heures à 200°C. L'angle d'inclinaison A par rapport à la surface 9 de la couche ferromagnétique 4 est voisin de 45°.

On effectue alors, comme représenté sur la figure 3, le dépôt d'une couche mince 10 en un matériau susceptible d'être gravé indépendamment de la couche ferromagnétique 4 et de la couche de résine 6. Cette couche 10 est en particulier une couche d'oxyde de silicium (SiO₂) de 0,1 »m d'épaisseur, déposée de façon isotrope et en particulier par dépôt chimique en phase vapeur assisté par plasma.

Ce dépôt isotrope mince épouse parfaitement le profil de la couche sous-jacente 6 ; il présente en particulier un creux 11 présentant des flancs inclinés 11a identiques à ceux 8a de l'ouverture 8 de la couche de résine 6.

On dépose ensuite une seconde couche de résine 12 photosensible notamment positive, telle que celle classiquement utilisée en photolithogravure, (Microposit 1350H de chez Shippley par exemple). Cette couche présente une épaisseur d'environ 1,7 »m.

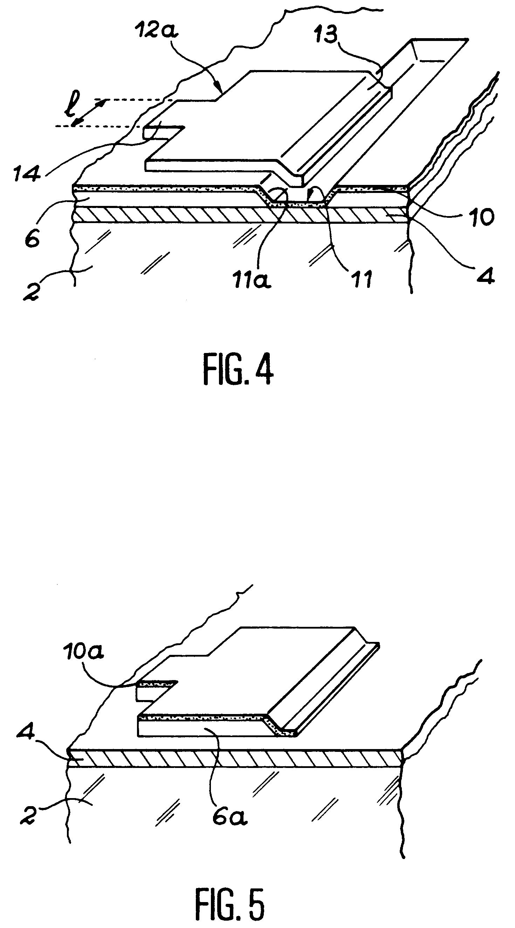

Par photolithogravure (insolation à travers un photomasque de forme appropriée puis développement) on réalise dans cette couche de résine un masque 12a tel que schématisé sur la figure 4, définissant la forme du motif à réaliser dans la couche 4, c'est-à-dire un masque fixant la forme de celle que l'on désire obtenir pour la pièce polaire de la tête magnétique d'écriture-lecture.

En particulier, ce masque 12a présente un appendice 14 de largeur l qui servira ultérieurement à la réalisation, dans la zone de l'entrefer de la tête magnétique, de l'appendice magnétisant. En outre, ce masque 12a masque en partie le creux 11 de la couche d'oxyde de silicium 10, et épouse parfaitement les flancs 11a dudit creux : il comporte donc un flanc incliné 13.

L'étape suivante du procédé consiste à soumettre la couche 10 à une gravure anisotrope du type ionique réactive en utilisant un plasma de CHF₃ afin d'éliminer les régions de cette couche 10 non recouvertes par la résine du masque 12a. On obtient alors un masque de gravure 10a pour la couche de résine 6, dont la forme fixe celle de la pièce polaire à réaliser.

On soumet ensuite les régions de la couche de résine 6, mises à nu lors de la gravure précédente de la couche 10, à une attaque anisotrope du type ionique réactive en vue d'éliminer ces régions mises à nu et de ne garder de la résine qu'en regard du masque 12a. La structure obtenue est représentée sur la figure 5.

Cette gravure anisotrope de la couche de résine 6 est effectuée avec un plasma d'oxygène sous une pression de 1,3 Pa environ (10 mtors). Elle permet en outre l'élimination du masque de résine 12a.

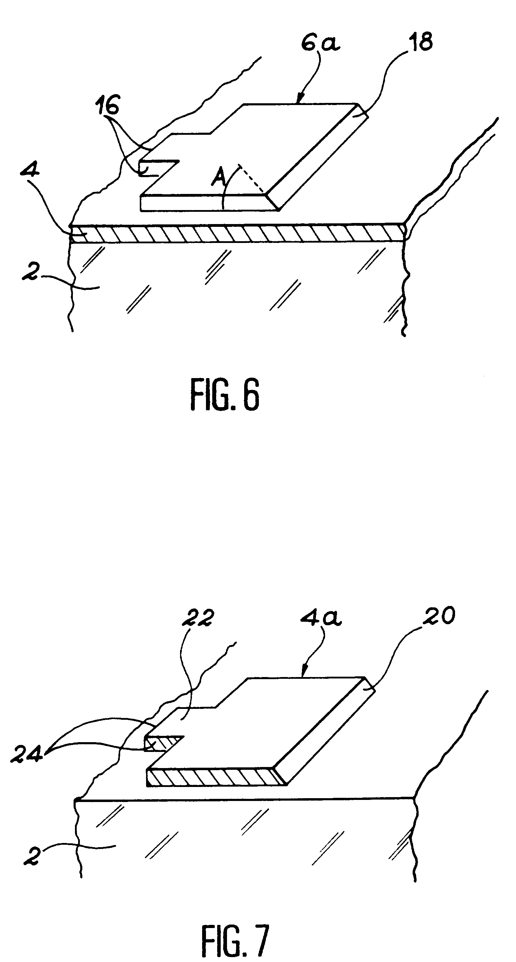

L'étape suivante du procédé consiste à éliminer le restant 10a de la couche d'oxyde 10 soit par gravure plasma en utilisant un plasma de CHF₃ soit par gravure chimique en utilisant par exemple un mélange de HF/NH₄F. La structure obtenue est celle représentée sur la figure 6.

Le masque de résine 6a ainsi obtenu représente l'image du motif à réaliser. Autrement dit il présente une forme et des dimensions identiques à celles que l'on désire obtenir dans la couche ferromagnétique 4 sous-jacente. En particulier ce masque 6a comporte des flancs verticaux 16, dans la région devant être située dans la zone de l'entrefer de la tête magnétique, et un flanc 18 incliné de l'angle A par rapport à la surface de l'échantillon, du côté opposé des flancs verticaux 16.

On effectue alors une gravure anisotrope ou unidirectionnelle à l'aide d'un plasma d'Argon ou bien un usinage ionique de la couche ferromagnétique 4 afin de transférer la forme du masque de résine 6a dans la couche ferromagnétique 4. La structure obtenue est celle représentée sur la figure 7.

Ce transfert permet en particulier l'obtention de la pièce polaire 4a d'une tête magnétique d'écriture-lecture présentant un flanc incliné 20 par rapport à la surface du support 2, dans sa partie arrière et un appendice 22 magnétisant, dans la région de l'entrefer ou région avant de la pièce polaire, présentant des flancs abrupts 24, verticaux. Le flanc incliné 20 facilitera le passage de marche des fils conducteurs servant à la création du champ magnétisant, réalisés ultérieurement.

La dernière étape du procédé consiste à éliminer le restant du masque 6a soit à l'aide d'un plasma d'oxygène soit à l'aide d'une gravure chimique en utilisant un solvant organique.

Ensuite, selon les procédés connus (dépôt, gravure, ...) on forme sur la pièce polaire 4a les conducteurs électriques servant à la création du champ magnétisant, dans l'entrefer de la tête magnétique.

Par ailleurs la nature et l'épaisseur de différentes couches peuvent être modifiées suivant l'application du procédé selon l'invention, envisagées.

## Revendications

1. Procédé d'obtention d'un motif (4a) en un premier matériau, présentant des flancs (20, 24) de pente différente, comprenant les étapes suivantes :
a) dépôt sur une couche de premier matériau (4) d'une première couche de résine photosensible (6) ;
b) formation d'une ouverture (8) à flancs inclinés (8a) dans la première couche de résine (6) ;
c) réalisation d'un masque (10a, 12a) sur la première couche de résine (6), masquant en partie ladite (8) ouverture, définissant la forme du motif à réaliser et comportant un flanc incliné (11a, 13) s'appuyant sur le flanc incliné correspondant de ladite ouverture ;
d) gravure anisotrope de la première couche de résine (6), selon une direction perpendiculaire à la surface de l'échantillon afin d'éliminer les régions de cette première couche non masquées ;
e) élimination du masque (12a) ;
f) gravure anisotrope de la couche de premier matériau (4a), selon une direction perpendiculaire à la surface de l'échantillon, en utilisant la première couche de résine gravée comme masque de gravure (6a) ; et
g) élimination du restant de la première couche de résine (6a).

2. Procédé selon la revendication 1, caractérisé en ce que l'on utilise une première couche de résine (6) photosensible positive polymérisable par chauffage.

3. Procédé selon la revendication 2, caractérisé en ce que l'étape (b) consiste à :
- former par photolithogravure une ouverture (8) dans la première couche de résine ; et
- recuire la résine afin d'obtenir les flancs inclinés (8a) de ladite ouverture.

4. Procédé selon l'une quelconque des revendications 1 à 3, caractérisé en ce que l'étape (c) consiste à :
- déposer une couche (10) de second matériau sur la structure obtenue lors de l'étape (b) que l'on peut graver sélectivement par rapport au premier matériau et par rapport à de la résine ;
- déposer une seconde couche (12) de résine photosensible sur toute la couche (10) du second matériau ;
- définir la forme (12a) du motif (4a) à réaliser, dans la seconde couche de résine, par photolithogravure ;
- effectuer une gravure anisotrope de la couche (10) de second matériau afin d'éliminer les régions de second matériau non recouvertes de résine (12a) et de mettre à nu les régions sous-jacentes de la première couche de résine (6).

5. Procédé selon l'une quelconque des revendications 1 à 4, caractérisé en ce que la couche (4) de premier matériau est une couche ferromagnétique.

6. Procédé selon l'une quelconque des revendications 1 à 5, caractérisé en ce que la couche (4) de premier matériau est une couche à base de fer et de nickel.

7. Procédé selon l'une quelconque des revendications 1 à 6, caractérisé en ce que le second matériau est du dioxyde de silicium.

8. Procédé de fabrication de la pièce polaire d'une tête magnétique d'écriture-lecture sur un substrat isolant, ladite pièce polaire (4a) comportant des flancs (20, 24) à pente différente, caractérisé en ce que l'on utilise le procédé selon l'une quelconque des revendications 1 à 7.

## Claims

1. Process for obtaining a pattern (4a) in a first material having differently sloping sides (20, 24), characterized in that it comprises the following stages:
a) deposition on a layer of first material (4) of a first photosensitive resin (6) layer,
b) formation of an opening (8) with inclined sides (8a) in the first resin layer (6),
c) producing a mask (10a, 12a) on the first resin layer (6), partly masking said opening (8), defining the shape of the pattern to be produced and having an inclined side (11a, 13) bearing on the inclined side of said opening,
d) anisotropic etching of the first resin layer (6) in a direction perpendicular to the surface of the sample in order to eliminate the regions of said first layer which are not masked,
e) elimination of the mask (12a),
f) anisotropic etching of the layer of the first material (4a) in a direction perpendicular to the surface of the sample using the first etched resin layer as the etching mask (6a), and
g) elimination of the remainder of the first resin layer (6).

2. Process according to claim 1, characterized in that a first positive photosensitive resin layer (6) polymerizable by heating is used.

3. Process according to claim 2, characterized in that stage b) comprises forming an opening (8) by photolithography in the first resin layer and annealing the resin in order to obtain inclined sides (8a) of said opening.

4. Process according to any one of the claims 1 to 3, characterized in that stage c) comprises:
- depositing a second material layer (10) on the structure obtained during stage b), which can be selectively etched with respect to the first material and with respect to the resin,
- depositing a second photosensitive resin layer (12) on the entire second material layer (10),
- defining the shape (12a) of the pattern (4a) to be produced in the second resin layer by photolithography,
- anisotropically etching the second material layer (10) in order to eliminate the second material regions not covered with resin (12a) and to expose the underlying regions of the first resin layer (6).

5. Process according to any one of the claims 1 to 4, characterized in that the first material layer (4) is a ferromagnetic layer.

6. Process according to any one of the claims 1 to 5, characterized in that the first material layer (4) is a layer based on iron and nickel.

7. Process according to any one of the claims 1 to 6, characterized in that the second material is silicon dioxide.

8. Process for the production of the pole piece of a read - write magnetic head on an insulating substrate, said pole piece (4a) having differently sloping sides (20, 24), characterized in that use is made of the process according to any one of the claims 1 to 7.

## Patentansprüche

1. Verfahren zur Herstellung eines Motivs (4a) aus einem ersten Material, das Flanken (20, 24) unterschiedlicher Neigung aufweist, die folgenden Schritte umfassend:
a) Abscheidung einer ersten photosensiblen Harzschicht (6) auf einer Schicht eines ersten Materials (4);
b) Bildung einer Öffnung (8) mit geneigten Flanken (8a) in der ersten Harzschicht (6);
c) Herstellung einer Maske (10a, 12a) auf der ersten Harzschicht (6), teilweise die genannte Öffnung (8) maskierend, die die Form des herzustellenden Motivs definiert und eine geneigte Flanke (11a, 13) aufweist, die auf der entsprechenden geneigten Flanke der genannten Öffnung aufliegt;
d) Anisotrope Ätzung der ersten Harzschicht (6) in einer Richtung, die senkrecht verläuft zu Oberfläche des Musters, um die nichtmaskierten Bereiche dieser ersten Schicht zu entfernen;
e) Beseitigung der Maske (12a);
f) Anisotrope Ätzung der Schicht aus erstem Material (4a) in einer Richtung, die senkrecht ist zu der Oberfläche des Musters, wobei die erste geätzte Harzschicht als Ätzmaske (6a) verwendet wird; und
g) Entfernung des Restes der ersten Harzschicht (6a).

2. Verfahren nach Anspruch 1, dadurch gekennzeichnet, daß man eine erste positiv photosensible Harzschicht verwendet, die polymerisierbar ist durch Erwärmung.

3. Verfahren nach Anspruch 2, dadurch gekennzeichnet, daß der Schritt (b) darin besteht:
- durch Photolithographie in der ersten Harzschicht eine Öffnung (8) auszubilden; und
- das Harz zu tempern, um die geneigten Flanken (8a) der genannten Öffnung herzustellen.

4. Verfahren nach einem der Ansprüche 1 bis 3, dadurch gekennzeichnet, daß der Schritt (c) darin besteht:
- Aufbringen einer Schicht (10) aus einem zweiten Material auf der in Schritt (b) erhaltenen Struktur, das man selektiv ätzen kann bezüglich des ersten Materials und bezüglich des Harzes.
- Aufbringen einer zweiten photosensiblen Harzschicht (12) auf der gesamten Schicht (10) des zweiten Materials;
- Definieren der Form (12a) des herzustellenden Motivs (4a) in der zweiten Harzschicht, durch Photolithographie;
- Durchführen einer anisotropen Ätzung der Schicht (10) aus dem zweiten Material zur Entfernung der nicht mit Harz bedeckten Bereiche des zweiten Materials (12a) und zur Freilegung der darunterliegenden Bereiche des ersten Harzschicht (6).

5. Verfahren nach einem der Ansprüche 1 bis 4, dadurch gekennzeichnet, daß die Schicht (4) aus dem ersten Material eine ferromagnetische Schicht ist.

6. Verfahren nach einem der Ansprüche 1 bis 5, dadurch gekennzeichnet, daß die Schicht (4) aus dem ersten Material eine Schicht auf Eisen- und Nickelbasis ist.

7. Verfahren nach einem der Ansprüche 1 bis 6, dadurch gekennzeichnet, daß das zweite Material ein Siliciumdioxid ist.

8. Herstellungsverfahren des Polschuhs eines Schreib-Lese-Magnetkopfes auf einem isolierenden Substrat, wobei der genannte Polschuh (4a) Flanken (20, 24) mit unterschiedlicher Neigung aufweist, dadurch gekennzeichnet, daß man das Verfahren nach einem der Ansprüche 1 bis 7 verwendet.
